# EUROPEAN PATENT APPLICATION

(11) **EP 4 679 588 A1**
(43) Date of publication of application: **14.01.2026**
(21) Application number: 24767198.5
(22) Date of filing: 06.03.2024
(51) Int. Cl.: H01M 50/186, H01G 11/78, H01G 11/84, H01M 50/105, H01M 50/148, H01M 50/178, H01M 50/184, H01M 50/188, H01M 50/197

(54) **POWER STORAGE DEVICE, BARRIER FILM, COVER UNIT, AND METHOD FOR PRODUCING COVER UNIT**

(30) Priority: 06.03.2023 JP 2023034139
(71) Applicant: Dai Nippon Printing Co., Ltd., Tokyo 162-8001 (JP)
(72) Inventor: MIYASHIRO, Kae, Tokyo 162-8001 (JP); KANAZAWA, Sayako, Tokyo 162-8001 (JP); SASAKI, Miho, Tokyo 162-8001 (JP); FUNAJIMA, Ryo, Tokyo 162-8001 (JP)
(74) Representative: Müller-Boré & Partner Patentanwälte PartG mbB
(86) International application number: PCT/JP2024/008627
(87) International publication number: WO 2024/185832

(57) **Abstract**

This power storage device is provided with: an electrode body; an outer package in which the electrode body is sealed; and a barrier film. The outer package comprises: an outer package film which enfolds the electrode body in such a manner that an opening is formed; and a cover member which is disposed at the position of the opening. The cover member has: a first surface that faces the electrode body; a second surface that is on the reverse side of the first surface; and a sealing surface that is connected to the first surface and the second surface. The barrier film is joined to the cover member so as to cover at least a part of the sealing surface.

## Description

### Technical Field

The present invention relates to an electrical storage device, a barrier film, a cover unit, and a method for manufacturing a cover unit.

### Background Art

PTL 1 discloses an all-solid-state battery as an example of an electrical storage device. The all-solid-state battery includes an electrode assembly, and an outer packaging that seals the electrode assembly. The outer packaging includes an exterior film wound around the electrode assembly so as to have an opening, and a lid disposed at the opening. The surfaces facing each other of the exterior film are heat-sealed.

### Citation List

### Patent Literature

PTL 1: Japanese Patent Laid-open Publication No. 2019-153504

### Summary of Invention

### Technical Problem

In the electrical storage device, moisture and gas may enter the inside from a region between the lid and the exterior film. Therefore, there is still room for improvement in terms of suppressing entry of moisture and gas in the electrical storage device.

An object of the present invention is to provide an electrical storage device capable of suppressing entry of at least one of moisture and gas, a barrier film used for the electrical storage device, a cover unit used for the electrical storage device, and a method for manufacturing a cover unit.

### Solution to Problem

An electrical storage device according to a first aspect of the present invention includes: an electrode assembly; an outer packaging sealing the electrode assembly; and a barrier film, in which the outer packaging includes an exterior film wrapping the electrode assembly so as to form an opening, and a lid disposed at the opening, the lid has a first surface facing the electrode assembly, a second surface opposite to the first surface, and a seal surface connected to the first surface and the second surface, and the barrier film is joined to the lid so as to cover at least a part of the seal surface.

An electrical storage device according to a second aspect of the present invention is the electrical storage device according to the first aspect, in which the barrier film is joined to the lid so as to cover at least a part of the first surface.

In an electrical storage device according to a third aspect of the present invention, the barrier film includes a barrier layer and an outer layer laminated on a side opposite to the lid with respect to the barrier layer.

An electrical storage device according to a fourth aspect of the present invention is the electrical storage device according to the second aspect, in which the barrier film includes a barrier layer and an outer layer laminated on a side opposite to the lid with respect to the barrier layer, and a portion covering at least a part of the seal surface and a portion covering at least a part of the first surface are connected, and an end part is located in the portion covering at least a part of the seal surface.

An electrical storage device according to a fifth aspect of the present invention is the electrical storage device according to any one of the first to third aspects, in which the barrier film is joined to the lid so as to cover at least a part of the second surface.

An electrical storage device according to a sixth aspect of the present invention is the electrical storage device according to the fifth aspect, in which in the barrier film, a portion covering at least a part of the seal surface and a portion covering at least a part of the second surface are connected, and an end part is covered with a covering portion.

An electrical storage device according to a seventh aspect of the present invention is the electrical storage device according to the first aspect, in which an end part of the barrier film is located in a portion covering at least a part of the seal surface and is located closer to the second surface than a boundary between the first surface and the seal surface.

An electrical storage device according to an eighth aspect of the present invention is the electrical storage device according to the first aspect, in which the barrier film has a portion connected to a portion joined to the lid and folded back toward the second surface, and an end part of the barrier film is located on the portion folded back toward the second surface.

An electrical storage device according to a ninth aspect of the present invention is the electrical storage device according to any one of the first to eighth aspects, further including an electrode terminal electrically connected to the electrode assembly, in which the lid is configured to cover a part of the electrode terminal, and the barrier film is disposed on at least a part of a region between the lid and the electrode terminal.

An electrical storage device according to a tenth aspect of the present invention is the electrical storage device according to any one of the first to eighth aspects, in which the barrier film is disposed in at least a part of an inside of the lid.

An electrical storage device according to an eleventh aspect of the present invention is the electrical storage device according to any one of the first to tenth aspects, in which the barrier film is joined to the exterior film so as to cover at least a part of the seal surface outside the exterior film.

A cover unit according to a twelfth aspect of the present invention is a cover unit used for an electrical storage device including an electrode assembly, and an exterior film wrapping the electrode assembly so as to form an opening, the cover unit including: a lid disposed at the opening; and a barrier film, in which the lid has a first surface, a second surface opposite to the first surface, and a seal surface connected to the first surface and the second surface, and the barrier film is joined to the lid so as to cover at least a part of the seal surface.

A cover unit according to a thirteenth aspect of the present invention is the cover unit according to the twelfth aspect, further including an electrode terminal joined to the lid.

A barrier film according to a fourteenth aspect of the present invention is used for the electrical storage device according to any one of the first to eleventh aspects.

A barrier film according to a fifteenth aspect of the present invention is used for the cover unit according to the twelfth aspect or the thirteenth aspect.

A method for manufacturing a cover unit according to a sixteenth aspect of the present invention is a method for manufacturing a cover unit, the cover unit being used for an electrical storage device including an electrode assembly, and an exterior film wrapping the electrode assembly so as to form an opening. The cover unit includes a lid disposed at the opening and a barrier film, in which the lid has a first surface facing the electrode assembly, a second surface opposite to the first surface, and a seal surface connected to the first surface and the second surface, and the barrier film is joined to the lid so as to cover at least a part of the seal surface. The method for manufacturing a cover unit includes a step of insert-molding the lid onto the barrier film.

A method for manufacturing a cover unit according to a seventeenth aspect of the present invention is a method for manufacturing a cover unit, the cover unit being used for an electrical storage device including an electrode assembly, and an exterior film wrapping the electrode assembly so as to form an opening. The cover unit includes a lid disposed at the opening and a barrier film, in which the lid has a first surface facing the electrode assembly, a second surface opposite to the first surface, and a seal surface connected to the first surface and the second surface, and the barrier film is joined to the lid so as to cover at least a part of the seal surface. The method for manufacturing a cover unit includes a step of joining the barrier film to the lid. Advantageous Effects of Invention

According to the electrical storage device, the barrier film used for the electrical storage device, the cover unit used for the electrical storage device, and a method for manufacturing an electrical storage device according to the present invention, at least one of moisture and gas can be suppressed from entering the inside of the electrical storage device.

### Brief Description of Drawings

[Fig. 1A] Fig. 1A is a plan view schematically showing an electrical storage device of a first embodiment.
[Fig. 1B] Fig. 1B is a view relating to a method for measuring a sealing strength of a second sealed portion of the electrical storage device of Fig. 1A.
[Fig. 2] Fig. 2 is a sectional view showing an example of a layer configuration of an exterior film included in the electrical storage device of Fig. 1A.
[Fig. 3] Fig. 3 is a view in which the exterior film included in the electrical storage device of Fig. 1A is unfolded.
[Fig. 4] Fig. 4 is a perspective view of a lid included in the electrical storage device of Fig. 1A.
[Fig. 5] Fig. 5 is a sectional view taken along line D5-D5 in Fig. 1A.
[Fig. 6] Fig. 6 is a partial sectional view of a cover unit of Fig. 5.
[Fig. 7] Fig. 7 is a sectional view showing an example of a layer configuration of a barrier film included in the electrical storage device of Fig. 1A.
[Fig. 8] Fig. 8 is a sectional view showing another example of the layer configuration of the barrier film included in the electrical storage device of Fig. 1A.
[Fig. 9] Fig. 9 is a sectional view showing still another example of the layer configuration of the barrier film included in the electrical storage device of Fig. 1A.
[Fig. 10] Fig. 10 is a flowchart showing an example of a manufacturing process of the electrical storage device of Fig. 1A.
[Fig. 11] Fig. 11 is a partial sectional view of a cover unit included in an electrical storage device of a second embodiment.
[Fig. 12] Fig. 12 is a partial sectional view of a cover unit included in an electrical storage device of a third embodiment.
[Fig. 13] Fig. 13 is a partial sectional view of a cover unit included in an electrical storage device of a fourth embodiment.
[Fig. 14] Fig. 14 is a partial sectional view of a cover unit included in an electrical storage device of a fifth embodiment.
[Fig. 15] Fig. 15 is a sectional view of an electrical storage device of a sixth embodiment.

### Description of Embodiments

Hereinafter, an electrical storage device according to an embodiment of the present invention will be described with reference to the drawings. In this specification, a numerical range indicated by the term "A to B" means "A or more" and "B or less". For example, the expression of "2 to 15 mm" means 2 mm or more and 15 mm or less.

### [1. First Embodiment]

### <1-1. Configuration of Electrical Storage Device>

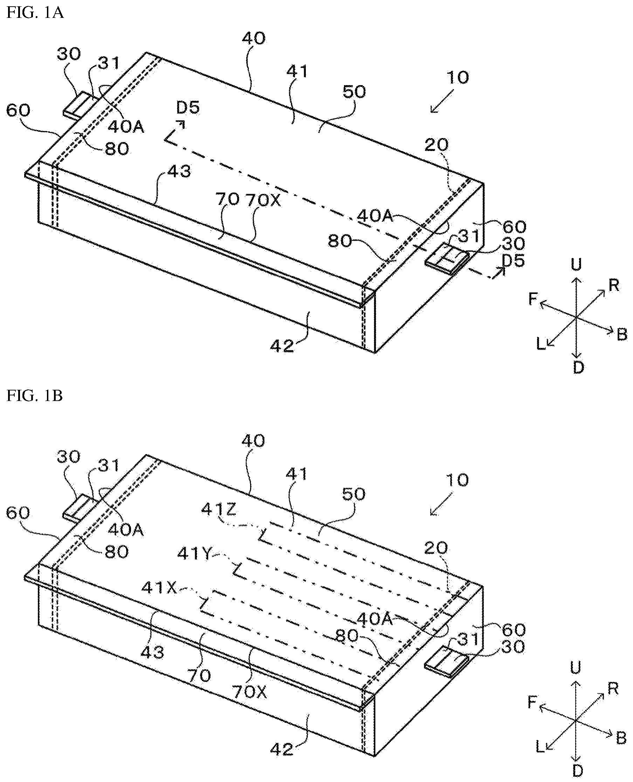

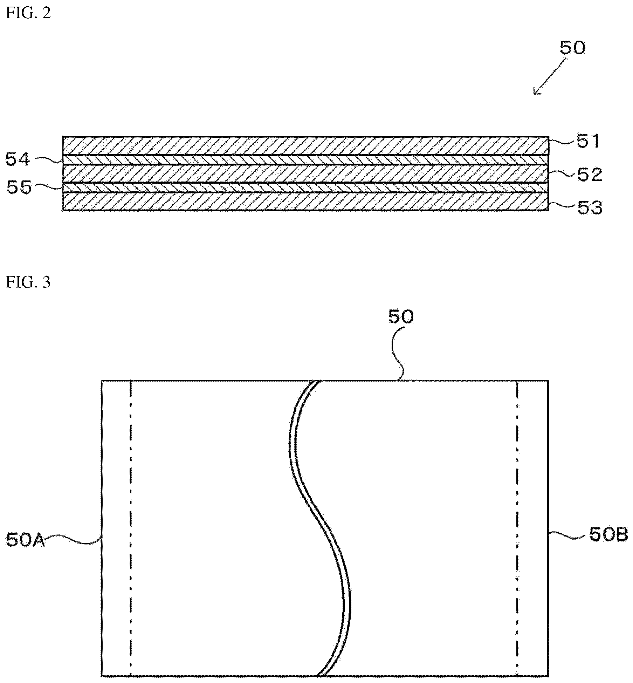

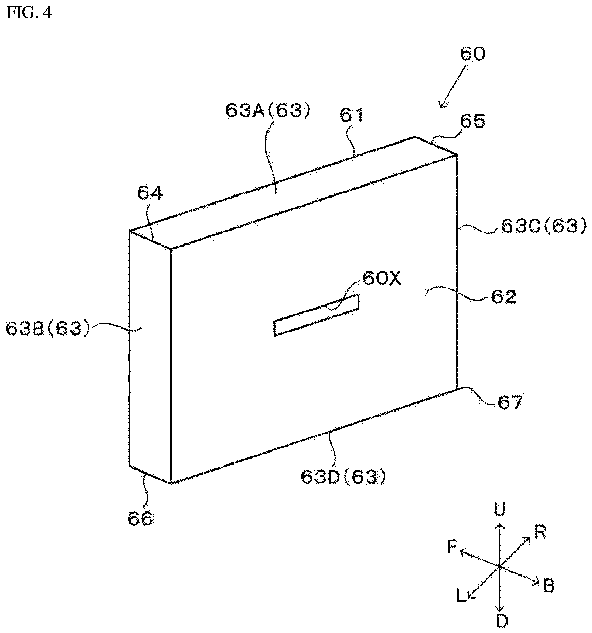

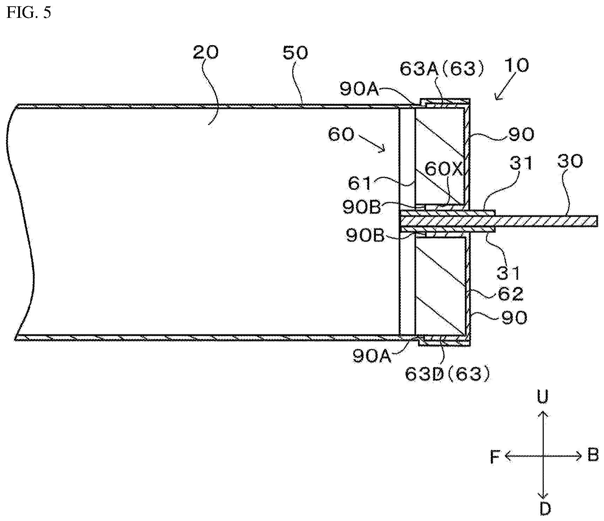

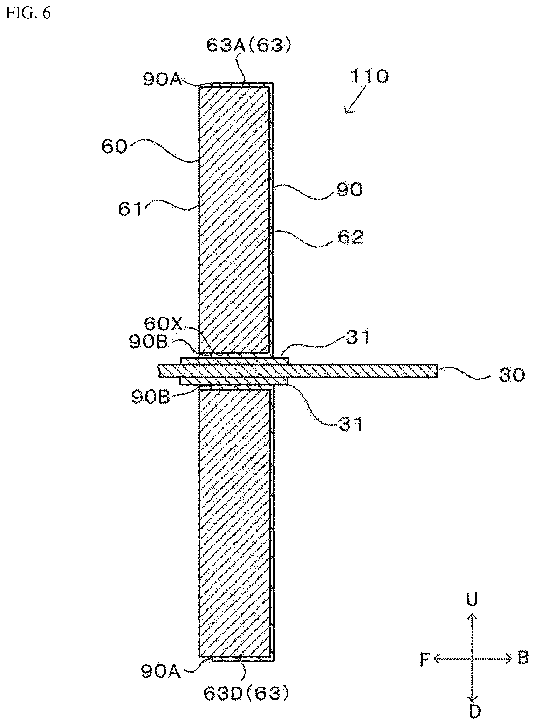

Fig. 1A is a plan view schematically showing an electrical storage device 10 of a first embodiment. Fig. 1B is a view relating to a method for measuring a sealing strength of a second sealed portion 80 of the electrical storage device 10. Fig. 2 is a sectional view showing a layer configuration of an exterior film 50 included in the electrical storage device 10 of Fig. 1A. Fig. 3 is a view in which the exterior film 50 included in the electrical storage device 10 of Fig. 1A is unfolded. Fig. 4 is a perspective view of a lid 60 included in the electrical storage device 10 of Fig. 1A, and Fig. 5 is a sectional view taken along line D5-D5 in Fig. 1A. Fig. 6 is a partial sectional view of a cover unit 110 of Fig. 5. In Fig. 1A, the direction along arrow UD indicates a thickness direction of the electrical storage device 10, the direction along arrow LR indicates a width direction of the electrical storage device 10, and the direction along arrow FB indicates a depth direction of the electrical storage device 10. The directions indicated by each of arrows UDLRFB are also shared with the subsequent drawings.

The electrical storage device 10 includes an electrode assembly 20, an electrode terminal 30, and an outer packaging 40. The electrode assembly 20 includes, for example, a lithium ion battery, a capacitor, a lithium ion polymer battery, an all-solid-state battery, a semi-solid-state battery, a pseudo-solid-state battery, a polymer battery, an all-polymer battery, a lead storage battery, a nickel-hydrogen storage battery, a nickel-cadmium storage battery, a nickel-iron storage battery, a nickel-zinc storage battery, a silver oxide-zinc storage battery, a metal-air battery, a polyvalent cation battery, or electrodes (positive electrode and negative electrode) forming an electrical storage member such as a capacitor, and a separator. In the present embodiment, the shape of the electrode assembly 20 is substantially a cuboid. Note that the "substantially cuboid" includes a perfect cuboid, and for example, a solid that can be seen as a cuboid by modifying the shape of a part of the outer surface thereof. The shape of the electrode assembly 20 may be, for example, a cylinder or a polygonal column.

In the present embodiment, the electrical storage device 10 includes two electrode terminals 30. The electrode terminal 30 is a metal terminal for use in input and output of electrical power in the electrode assembly 20. One end part of the electrode terminal 30 is electrically connected to an electrode (positive electrode or negative electrode) in the electrode assembly 20. The other end part of the electrode terminal 30 protrudes outward from an end edge of the outer packaging 40, for example. The electrode terminal 30 is only required to enable input and output of electrical power in the electrode assembly 20, and is not required to protrude from the outer packaging 40, for example. When the lid 60 described later is made from, for example, metal, the lid 60 may also function as the electrode terminal 30. In this case, the lid 60 having a function as an electrode terminal may, or is not required to, protrude from the outer packaging 40.

The metal material for forming the electrode terminal 30 is, for example, aluminum, nickel, copper or the like. For example, when the electrode assembly 20 is a lithium ion battery, the electrode terminal 30 connected to the positive electrode is typically made from aluminum or the like, and the electrode terminal 30 connected to the negative electrode is typically made from copper, nickel or the like. The outermost layer of the electrode assembly 20 is not necessarily an electrode, and may be, for example, a protective tape or a separator.

The outer packaging 40 seals the electrode assembly 20. The outer packaging 40 includes the exterior film 50 and the lid 60. The exterior film 50 wraps the electrode assembly 20 so as to have an opening 40A. In the present embodiment, the exterior film 50 is wound around the electrode assembly 20 so as to have the opening 40A. The lid 60 is disposed on a side of the electrode assembly 20 so as to close the opening 40A. The electrode assembly 20 may be accommodated in the exterior film 50 formed in a cylindrical shape so as to form the opening 40A, and the opening 40A may be closed by the lid 60.

It is preferable that an adhesive film 31 is bonded to the electrode terminal 30 from the viewpoint of suitable bonding to the lid 60. The adhesive film 31 can be arbitrarily selected as long as it is a film capable of bonding the electrode terminal 30 formed of metal and the lid 60 formed of resin. For the adhesive film 31, for example, a polyolefin-based resin such as a polyethylene-based resin or a polypropylene-based resin, a cyclic polyolefin-based resin, or an acid-modified polyolefin-based resin obtained by graft-modifying the polyolefin-based resin with an acid such as maleic anhydride can be used. The adhesive film 31 can be a film having a single layer or two or more layers of any of the above-mentioned resins. In the present embodiment, the adhesive film 31 is joined to substantially the whole of a portion of the electrode terminal 30 which is covered with the lid 60.

For example, there is a method in which a housing portion (recess) for housing the electrode assembly 20 is formed in the exterior film 50 through cold molding. However, it is not always easy to form a deep housing portion by such a method. If an attempt is made to form a deep (for example, 15 mm in terms of molding depth) housing portion (recess) by cold molding, pinholes or cracks are generated in the exterior film 50, leading to a rise in possibility that battery performance deteriorates. On the other hand, since the outer packaging 40 seals the electrode assembly 20 by winding the exterior film 50 around the electrode assembly 20, the electrode assembly 20 can be easily sealed regardless of the thickness of the electrode assembly 20. For reducing a dead space between the electrode assembly 20 and the exterior film 50 in order to improve the volume energy density of the electrical storage device 10, it is preferable that the exterior film 50 is wound in a state of being in contact with the outer surface of the electrode assembly 20. In an all-solid-state battery, it is necessary to eliminate the space between the electrode assembly 20 and the exterior film 50 from the viewpoint that it is necessary to uniformly apply a high pressure from the outer surface of the battery for exhibiting battery performance, and therefore, it is preferable that the exterior film 50 is wound in a state of being in contact with the outer surface of the electrode assembly 20.

The exterior film 50 is, for example, a laminate (laminate film) including a base material layer 51, a barrier layer 52 and a heat-sealable resin layer 53 in the stated order. In the exterior film 50, the heat-sealable resin layer 53, the base material layer 51, the barrier layer 52, and the heat-sealable resin layer 53 may be laminated in the stated order. In the exterior film 50, the heat-sealable resin layer 53, the barrier layer 52, and the heat-sealable resin layer 53 may be laminated in the stated order. The exterior film 50 is not required to include all these layers, and may be free of, for example, the barrier layer 52. That is, the exterior film 50 is only required to be made from a material that is flexible and easy to bend, and the exterior film 50 may be made from, for example, a resin film. The exterior film 50 is preferably heat-sealable.

The base material layer 51 in the exterior film 50 is a layer for imparting heat resistance to the exterior film 50 to suppress generation of pinholes which may occur during processing or distribution. The base material layer 51 includes, for example, at least one of a stretched polyester resin layer and a stretched polyamide resin layer. For example, when the base material layer 51 includes at least one of a stretched polyester resin layer and a stretched polyamide resin layer, the barrier layer 52 can be protected during processing of the exterior film 50 to suppress breakage of the exterior film 50. From the viewpoint of increasing the tensile elongation of the exterior film 50, the stretched polyester resin layer is preferably a biaxially stretched polyester resin layer, and the stretched polyamide resin layer is preferably a biaxially stretched polyamide resin layer. Further, from the viewpoint of excellent piercing strength or impact strength, the stretched polyester resin layer is more preferably a biaxially stretched polyethylene terephthalate (PET) film, and the stretched polyamide resin layer is more preferably a biaxially stretched nylon (ONy) film. The base material layer 51 may include both a stretched polyester resin layer and a stretched polyamide resin layer. From the viewpoint of film strength, the thickness of the base material layer 51 is, for example, preferably 5 to 300 µm, more preferably 5 to 150 µm.

The barrier layer 52 is a layer which suppresses at least ingress of moisture. The barrier layer 52 is joined to, for example, the base material layer 51 with an adhesive layer 54 interposed therebetween. Examples of the barrier layer 52 include metal foils, deposited films and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the barrier layer 52 include resin films provided with at least one of these deposited films and resin layers. A plurality of barrier layers 52 may be provided. Preferably, the barrier layer 52 contains a layer formed of a metal material. Specific examples of the metal material forming the barrier layer 52 include aluminum alloys, stainless steel, titanium steel and steel sheets. When the metal material is used as a metal foil, it is preferable that the metal material includes at least one of an aluminum alloy foil and a stainless steel foil.

In the barrier layer 52, the layer formed of the metal material described above may contain a metal recycled material. Examples of the metal recycled material include recycled materials of an aluminum alloy, stainless steel, titanium steel, or a steel plate. These recycled materials can be each obtained by a known method. The recycled material of the aluminum alloy can be obtained by, for example, a manufacture method described in International Publication No. WO 2022/092231. The barrier layer 52 may be formed only of a recycled material, or may be formed of a mixed material of a recycled material and a virgin material. The metal recycled material is a metal material obtained by, for example, collecting, isolating and purifying various products used in what is called a city, wastes from manufacturing processes, and the like, so that the material can be reused. The virgin material from a metal material is a new metal material obtained by refining a metal natural resource (raw material), which is not a recycled material.

The aluminum alloy foil is more preferably a soft aluminum alloy foil formed of, for example, an annealed aluminum alloy from the viewpoint of improving the moldability or followability of the exterior film 50, and is preferably an aluminum alloy foil containing iron from the viewpoint of further improving the moldability or followability. In the aluminum alloy foil containing iron (100 mass%), the content of iron is preferably 0.1 to 9.0 mass%, more preferably 0.5 to 2.0 mass%. When the content of iron is 0.1 mass% or more, it is possible to obtain the exterior film 50 having more excellent moldability. When the content of iron is 9.0 mass% or less, it is possible to obtain the exterior film 50 more excellent in flexibility. Examples of the soft aluminum alloy foil include aluminum alloy foils having a composition specified in JIS H4160: 1994 A8021H-O, JIS H4160: 1994 A8079H-O, JIS H4000: 2014 A8021P-O, or JIS H4000: 2014 A8079P-O. If necessary, silicon, magnesium, copper, manganese or the like may be added. Softening can be performed by annealing or the like. From the viewpoint of improving the mechanical strength of the exterior film 50, the aluminum alloy foil is more preferably a hard aluminum alloy foil made of, for example, a work-hardened aluminum alloy. Examples of the hard aluminum alloy foil include aluminum alloy foils having a composition specified in JIS H4160: 1994 A8021H-H18, JIS H4160: 1994 A8079H-H18, JIS H4000: 2014 A8021P-H14, or JIS H4000: 2014 A8079P-H14.

Examples of the stainless steel foil include austenitic stainless steel foils, ferritic stainless steel foils, austenitic/ferritic stainless steel foils, martensitic stainless steel foils and precipitation-hardened stainless steel foils. From the viewpoint of providing the exterior film 50 further excellent in moldability or followability, it is preferable that the stainless steel foil is formed of austenitic stainless steel.

Specific examples of the austenite-based stainless steel foil include SUS 304 stainless steel, SUS 301 stainless steel and SUS 316L stainless steel, and of these, SUS 304 stainless steel is especially preferable.

In the case of a metal foil, the thickness of the barrier layer 52 may be, for example, about 9 to 200 µm as long as it exhibits a function as a barrier layer that suppresses at least infiltration of moisture. The thickness of the barrier layer 52 is preferably about 85 µm or less, more preferably about 50 µm or less, still more preferably about 40 µm or less, particularly preferably about 35 µm or less. The thickness of the barrier layer 52 is preferably about 10 µm or more, still more preferably 20 µm or more, more preferably about 25 µm or more. The thickness of the barrier layer 52 is preferably in the range of about 10 to 85 µm, about 10 to 50 µm, about 10 to 40 µm, about 10 to 35 µm, about 20 to 85 µm, about 20 to 50 µm, about 20 to 40 µm, about 20 to 35 µm, about 25 to 85 µm, about 25 to 50 µm, about 25 to 40 µm, or about 25 to 35 µm. When the barrier layer 52 is formed of an aluminum alloy foil, the thickness thereof is especially preferably in above-described range. From the viewpoint of imparting high moldability and high rigidity to the exterior film 50, the thickness of the barrier layer 52 is preferably about 35 µm or more, more preferably about 45 µm or more, still more preferably about 50 µm or more, still more preferably about 55 µm or more, and preferably about 200 µm or less, more preferably about 85 µm or less, still more preferably about 75 µm or less, still more preferably about 70 µm or less, and is preferably in the range of about 35 to 200 µm, about 35 to 85 µm, about 35 to 75 µm, about 35 to 70 µm, about 45 to 200 µm, about 45 to 85 µm, about 45 to 75 µm, about 45 to 70 µm, about 50 to 200 µm, about 50 to 85 µm, about 50 to 75 µm, about 50 to 70 µm, about 55 to 200 µm, about 55 to 85 µm, about 55 to 75 µm, or about 55 to 70 µm. When the exterior film 50 has high moldability, deep drawing molding can be facilitated to contribute to an increase in capacity of the electrical storage device. Since the rigidity of the exterior film 50 is enhanced, the exterior film 50 can be suitably wound around the electrode assembly 20 when the exterior film 50 is wound around the electrode assembly 20. When the capacity of the electrical storage device is increased, the weight of the electrical storage device increases, but the enhancement of the rigidity of the exterior film 50 can contribute to high hermeticity of the electrical storage device. In particular, when the barrier layer 52 includes a stainless steel foil, the thickness of the stainless steel foil is preferably about 60 µm or less, more preferably about 50 µm or less, still more preferably about 40 µm or less, still more preferably about 30 µm or less, particularly preferably about 25 µm or less. The thickness of the stainless steel foil is preferably about 10 µm or more, more preferably about 15 µm or more. The thickness of the stainless steel foil is preferably in the range of about 10 to 60 µm, about 10 to 50 µm, about 10 to 40 µm, about 10 to 30 µm, about 10 to 25 µm, about 15 to 60 µm, about 15 to 50 µm, about 15 to 40 µm, about 15 to 30 µm, or about 15 to 25 µm.

When the barrier layer 52 is an aluminum foil, it is preferable that a corrosion-resistant film is provided at least on a surface on a side opposite to the base material layer 51 for prevention of dissolution and corrosion, and the like. The barrier layer 52 may include a corrosion-resistant film on each of both surfaces. Here, the corrosion-resistant film refers to a thin film obtained by subjecting the surface of the barrier layer 52 to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (for example, acid resistance and alkali resistance) to the barrier layer 52. Specifically, the corrosion-resistant film means a film which improves the acid resistance of the barrier layer 52 (acid-resistant film), a film which improves the alkali resistance of the barrier layer 52 (alkali-resistant film), or the like. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. When the barrier layer 52 is provided with the corrosion-resistant film, the barrier layer 52 is regarded as including the corrosion-resistant film.

The corrosion-resistant film exhibits the effects of preventing delamination between the barrier layer 52 (e.g. an aluminum alloy foil) and the base material layer 51 during molding or winding of the exterior film 50; preventing dissolution and corrosion of the surface of the barrier layer 52, particularly dissolution and corrosion of aluminum oxide present on the surface of the barrier layer 52 when the barrier layer 52 is an aluminum alloy foil, by hydrogen fluoride generated by reaction of an electrolyte with moisture; improving the bondability (wettability) of the surface of the barrier layer 52; preventing delamination between the base material layer 51 and the barrier layer 52 during heat-sealing; and preventing delamination between the base material layer 51 and the barrier layer 52 during molding.

The heat-sealable resin layer 53 is joined to, for example, the barrier layer 52 with an adhesive layer 55 interposed therebetween. The heat-sealable resin layer 53 in the exterior film 50 is a layer that imparts a heat sealing property to the exterior film 50 by heat sealing. Examples of the heat-sealable resin layer 53 include resin films formed of a polyester-based resin such as a polyethylene terephthalate-based resin or a polybutylene terephthalate-based resin, a polyolefin-based resin such as a polyethylene-based resin or a polypropylene-based resin, or an acid-modified polyolefin-based resin obtained by graft-modifying the polyolefin-based resin with an acid such as maleic anhydride. From the viewpoint of sealability and strength, the thickness of the heat-sealable resin layer 53 is, for example, preferably 20 to 300 µm, more preferably 40 to 150 µm.

The exterior film 50 preferably includes one or more layers having a buffer function (hereinafter, referred to as "buffer layers") outside the heat-sealable resin layer 53, more preferably outside the barrier layer 52. The buffer layer may be laminated outside the base material layer 51, and the base material layer 51 may also function as a buffer layer. When the exterior film 50 includes a plurality of buffer layers, the buffer layers may lie side-by-side, or may be laminated with the base material layer 51, the barrier layer 52 or the like interposed between the buffer layers.

The material for forming the buffer layer can be arbitrarily selected from materials having a cushioning property. The material having a cushioning property is, for example, rubber, a nonwoven fabric, or a foamed sheet. The rubber is, for example, natural rubber, fluororubber, or silicone rubber. The rubber hardness is preferably about 20 to 90. The material for forming a nonwoven fabric is preferably a material having excellent heat resistance. When the buffer layer is made from a nonwoven fabric, the lower limit of the thickness of the buffer layer is preferably 100 µm, still more preferably 200 µm, still more preferably 1,000 µm. When the buffer layer is made from a nonwoven fabric, the upper limit of the thickness of the buffer layer is preferably 5,000 µm, still more preferably 3,000 µm. The thickness of the buffer layer is preferably in the range of 100 µm to 5,000 µm, 100 µm to 3,000 µm, 200 µm to 5,000 µm, 200 µm to 3,000 µm, 1,000 µm to 5,000 µm, or 1,000 µm to 3,000 µm. The thickness of the buffer layer is most preferably in the range of 1,000 µm to 3,000 µm.

When the buffer layer is made from rubber, the lower limit of the thickness of the buffer layer is preferably 1 mm, still more preferably 0.5 mm. When the buffer layer is made from rubber, the upper limit of the thickness of the buffer layer is preferably 10 mm, still more preferably 5 mm, still more preferably 2 mm. When the buffer layer is made from rubber, the thickness of the buffer layer is preferably in the range of 1 mm to 10 mm, 1 mm to 5 mm, 1 mm to 2 mm, 0.5 mm to 10 mm, 0.5 mm to 5 mm or 0.5 mm to 2 mm.

When the exterior film 50 includes a buffer layer, the buffer layer functions as a cushion, so that the exterior film 50 is prevented from being damaged by the impact of falling of the electrical storage device 10 or handling during manufacturing of the electrical storage device 10.

The lid 60 shown in Fig. 4 has, for example, a cuboid shape, and is, for example, a resin molded article made from a resin material. The lid 60 may be formed by, for example, cold-molding the exterior film 50, or may be a metal molded article. The material for forming the lid 60 may include at least two or more kinds of materials of a metal oxide, a carbon material, and a rubber material, and may include a metal oxide, a carbon material, and a rubber material.

The lid 60 preferably contains a resin material. Here, the phrase "contain a resin material" means that the content ratio of the resin material is 50 mass% or more, preferably 80 mass% or more, more preferably 90 mass% or more, still more preferably 95 mass% or more when the total of materials for forming the lid 60 is 100 mass%. That is, the material for forming the lid 60 can contain a material other than the resin material in addition to the resin material.

Specific examples of the resin include resins such as polyester, polyolefin, polyamide, epoxy resin, acrylic resin, fluororesin, polyurethane, silicone resin, and phenol resin, and modified products of these resins. The resin material may be a mixture of these resins, a copolymer of these resins, or a modified product of the copolymer. Among them, the resin material is preferably a heat-sealable resin such as polyester or polyolefin, and more preferably polyolefin. When the resin material is resin, the lid 60 may be molded by any molding method.

Specific examples of the polyester include polyethylene terephthalate, polybutylene terephthalate, polyethylene naphthalate, polybutylene naphthalate, polyethylene isophthalate, and copolyester. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate), and polyethylene(terephthalate/decane dicarboxylate). Among them, the resin material is preferably polybutylene terephthalate from the viewpoint of enhancing heat resistance and pressure resistance.

Specific examples of the polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (e.g., block copolymers of propylene and ethylene) and random copolymers of polypropylene (e.g., random copolymers of propylene and ethylene); propylene-α-olefin copolymers; and terpolymers of ethylene-butene-propylene. The polyolefin resin in the case of a copolymer may be a block copolymer or a random copolymer. Among them, the resin material is preferably polypropylene because it is excellent in heat-sealing property and electrolytic solution resistance.

The resin as the resin material may contain a filler if necessary. Specific examples of the filler include glass beads, graphite, glass fiber, and carbon fiber. When the resin as the resin material contains the filler, the deformation resistance of the lid 60 to a temperature change can be improved.

The melt mass flow rate of the resin material contained in the material for forming the lid 60 is preferably in the range of 1 g/10 min to 80 g/10 min, more preferably 5 g/10 min to 60 g/10 min. The melt mass flow rate is measured based on JIS K7210-1:2014.

The lid 60 may contain a conductive material. The phrase "contain a conductive material" means that the content ratio of the conductive material is 50 mass% or more, preferably 80 mass% or more, more preferably 90 mass% or more, still more preferably 95 mass% or more when the total of materials for forming the lid 60 is 100 mass%. That is, the material for forming the lid 60 can contain a material other than the conductive material in addition to the conductive material.

The conductive material for forming the lid 60 is, for example, a metal material. The metal material for forming the lid 60 is, for example, aluminum, an aluminum alloy, nickel, copper, or a copper alloy. For example, when the electrode assembly 20 is a lithium ion battery, the lid 60 connected to the positive electrode is preferably made from aluminum or an aluminum alloy. The lid 60 connected to the negative electrode is preferably made of nickel, copper, or a copper alloy. The material for forming the lid 60 connected to the negative electrode may be copper plated with nickel. The material for forming the lid 60 may contain a metal recycled material. When the lid 60 contains a conductive material, the lid 60 also functions as the electrode terminal 30. Since the electrode terminal 30 can be omitted from the electrical storage device 10, the configuration of the electrical storage device 10 can be simplified.

When the lid 60 contains a conductive material, the lid 60 may be joined to the exterior film 50 and a barrier film 90 described later with an adhesive film interposed therebetween. The adhesive film can be arbitrarily selected as long as it is a film capable of bonding the exterior film 50, the barrier film 90, and the lid 60. The adhesive film is preferably a multilayer film including at least a heat-sealable resin layer, a heat-resistant base material layer and a heat-sealable resin layer in the stated order. As specifications about the heat-sealable resin layer of the adhesive film, specifications about the heat-sealable resin layer 53 can be applied. As materials for forming the heat-sealable resin layers on both sides of the adhesive film, the same material or different materials may be used, and materials that match the material for forming the heat-sealable resin layer of the exterior film 50 and the barrier film 90 and the material for forming the lid 60 are appropriately selected. The material for forming the heat-sealable resin layer of the adhesive film, which is bonded to the lid 60, is preferably an acid-modified polyolefin-based resin obtained by graft modification with an acid such as maleic anhydride. For the heat-sealable resin layer of the adhesive film, which is bonded to the exterior film 50 and the barrier film 90, the same material as that for forming the heat-sealable resin layer of the exterior film 50 and the barrier film 90 is preferably used.

For the heat-resistant base material layer, any film may be used as long as it is made from a heat-resistant resin, and examples thereof include non-stretched or stretched films of polyethylene terephthalate, polyethylene naphthalate, polyphenylene sulfide, polymethylpentene (registered trademark), polyacetal cyclic polyolefin, polyethylene, polypropylene and the like. Polyethylene terephthalate is particularly preferable because it is inexpensive and has high strength.

The adhesive film preferably has adhesion. When the second sealed portion 80 described later is formed with the adhesive film disposed between the barrier film 90 and the lid 60, the adhesive film is hardly displaced with respect to the lid 60 and the barrier film 90. When the barrier film 90 and the lid 60 are joined to each other with the adhesive film disposed between the barrier film 90 and the lid 60, the adhesive film is hardly displaced with respect to the lid 60 and the barrier film 90. By incorporating an adhesion-imparting resin into the heat-sealable resin layer of the adhesive film, adhesion can be imparted to the adhesive film. Examples of the adhesion-imparting resin include amorphous polyolefins. Examples of the amorphous polyolefin include amorphous polypropylene, and copolymers of amorphous propylene and another α-olefin. The content of the adhesion-imparting resin with respect to the parent material forming the heat-sealable resin is preferably 10 to 20 wt% or less.

The lid 60 has a first surface 61, a second surface 62, and a seal surface 63. The first surface 61 faces the electrode assembly 20. The second surface 62 is a surface on a side opposite to the first surface 61. The seal surface 63 is connected to the first surface 61 and the second surface 62, and is joined to the heat-sealable resin layer 53 of the exterior film 50 with the barrier film 90 interposed therebetween.

The seal surface 63 includes a first seal surface 63A, a second seal surface 63B, a third seal surface 63C, and a fourth seal surface 63D. The first seal surface 63A forms the upper surface of the lid 60. The first seal surface 63A extends in a first direction (LR direction in the present embodiment) in front view of the lid 60. The second seal surface 63B and the third seal surface 63C are connected to the first seal surface 63A and form a lateral surface of the lid 60. The second seal surface 63B and the third seal surface 63C extend in a second direction (UD direction in the present embodiment) crossing the first direction in front view of the lid 60. In the present embodiment, the first direction and the second direction orthogonally cross each other in front view of the lid 60. The first direction and the second direction are not required to orthogonally cross each other in front view of the lid 60. The fourth seal surface 63D forms the lower surface of the lid 60. The fourth seal surface 63D extends in a first direction (LR direction in the present embodiment) in front view of the lid 60.

When the lid 60 has a plate shape, the lid 60 is preferably thick enough to suppress deformation of the outer packaging 40 even if electrical storage devices 10 are stacked. From another point of view, when the lid 60 has a plate shape, the seal surface 63 of the lid 60 is preferably thick enough to ensure that the seal surface 63 of the lid 60 and the exterior film 50 can be suitably heat-sealed in formation of the second sealed portion 80 described later. The minimum value of the thickness of the lid 60 is, for example, 1.0 mm, more preferably 3.0 mm, still more preferably 4.0 mm. The maximum value of the thickness of the lid 60 is, for example, 20 mm, more preferably 15 mm, still more preferably 10 mm. The maximum value of the thickness of the lid 60 may be 20 mm or more. The thickness of the material for forming the lid 60 is preferably in the range of 1.0 mm to 20 mm, 1.0 mm to 15 mm, 1.0 mm to 10 mm, 3.0 mm to 20 mm, 3.0 mm to 15 mm, 3.0 mm to 10 mm, 4.0 mm to 20 mm, 4.0 mm to 15 mm, or 4.0 mm to 10 mm. In the present embodiment, when the lid 60 is described as having a plate shape, the material for forming the lid 60 does not include a film defined by Japanese Industrial Standard (JIS), Packaging Terminology Standard. The thickness of the lid 60 may vary depending on a portion of the lid 60. When the thickness of the lid 60 varies depending on a portion, the thickness of the thickest portion of the lid 60 is defined as a thickness of the lid 60.

The lid 60 further includes boundaries 64, 65, 66 and 67. The boundary 64 is a boundary between the first seal surface 63A and the second seal surface 63B. The boundary 65 is a boundary between the first seal surface 63A and the third seal surface 63C. The boundary 66 is a boundary between the fourth seal surface 63D and the second seal surface 63B. The boundary 67 is a boundary between the fourth seal surface 63D and the third seal surface 63C. The sectional shapes of the boundaries 64 to 67 viewed from the FB direction may be angular, or may be rounded off by R processing. In the present embodiment, the boundaries 64 to 67 are angular.

From the viewpoint of suitably heat-sealing the lid 60 and the exterior film 50, the main components of materials for forming the seal surface 63 of the lid 60 and materials for forming the heat-sealable resin layer 53 of the exterior film 50 are preferably the same. In the present embodiment, polypropylene is a main component of materials for forming the lid 60 and materials for forming the heat-sealable resin layer 53. Note that the main component refers to, for example, a material that accounts for 50% or more of the materials contained in a constituent element.

In the present embodiment, a through-hole 60X into which the electrode terminal 30 is inserted is formed in the lid 60. The through-hole 60X extends through the first surface 61 and the second surface 62. In a state where the electrode assembly 20 is wrapped in the exterior film 50, the electrode terminal 30 protrudes to the outside of the outer packaging 40 by passing through the through-hole 60X formed in the lid 60. A small gap between the through-hole 60X of the lid 60 and the electrode terminal 30 is filled with, for example, resin. In the electrical storage device 10, the location at which the electrode terminal 30 protrudes to the outside can be arbitrarily selected. For example, the electrode terminal 30 may protrude to the outside from a hole formed in one of the six surfaces of the outer packaging 40. In this case, a small gap between the outer packaging 40 and the electrode terminal 30 is filled with, for example, a resin. In the electrical storage device 10, the lid 60 and the electrode terminal 30 are provided separately, but the lid 60 and the electrode terminal 30 may be integrally formed. When the lid 60 also functions as an electrode terminal, or when the electrode terminal 30 is disposed between the lid 60 and the exterior film 50, the through-hole 60X may not be formed in the lid 60.

In the present embodiment, with the exterior film 50 wound around the electrode assembly 20 so as to have the opening 40A, surfaces of the exterior film 50 which face each other (heat-sealable resin layer 53) are heat-sealed to form a first sealed portion 70.

The first sealed portion 70 is formed by heat-sealing a portion including a first edge 50A and a portion including a second edge 50B in the exterior film 50 shown in Fig. 3. The first sealed portion 70 extends in a longitudinal direction (FB direction) of the outer packaging 40. In the outer packaging 40, a location at which the first sealed portion 70 is formed can be arbitrarily selected. In the present embodiment, a root 70X of the first sealed portion 70 is preferably located on a side 43 of a boundary between a first surface 41 and a second surface 42 of the outer packaging 40. The first surface 41 has a larger area than the second surface 42. The root 70X of the first sealed portion 70 may be located on an arbitrary surface of the outer packaging 40. In the present embodiment, the first sealed portion 70 protrudes outward with respect to the electrode assembly 20 in plan view. For example, the first sealed portion 70 may be folded toward the second surface 42 or toward the first surface 41 of the outer packaging 40.

As shown in Fig. 5 or 6, in the present embodiment, from the viewpoint of suppressing at least one of moisture and gas from entering the inside of the outer packaging 40 from a region between the lid 60 and the exterior film 50, the barrier film 90 is joined to the lid 60. In the present embodiment, in the barrier film 90, at least one of moisture and gas enters the inside of the outer packaging 40. The barrier film 90 may cover at least a part of the seal surface 63 of the lid 60. In the present embodiment, the barrier film 90 covers a part of the seal surface 63, the entire second surface 62, and a part of the inside of the through-hole 60X of the lid 60. The barrier film 90 may cover the boundaries 64 to 67. Since the barrier film 90 covers the second surface 62 and the inside of the through-hole 60X in addition to the seal surface 63 and the boundaries 64 to 67, moisture is suppressed from entering the inside of the outer packaging 40 from a region between the electrode terminal 30 and the through-hole 60X. The barrier film 90 may be configured by one film, and for example, a portion covering the seal surface 63 and a portion covering the second surface 62 may be configured separately. In other words, the barrier film 90 may be a plurality of divided films.

The location of an end part 90A covering the seal surface 63 and the location of an end part 90B covering the inside of the through-hole 60X of the lid 60 in the barrier film 90 can be arbitrarily selected. When the electrical storage device 10 is a battery containing an electrolytic solution such as a lithium ion battery, end parts 90A and 90B of the barrier film 90 may come into contact with a gas such as hydrogen fluoride generated from the electrolytic solution, and a barrier layer 91 included in the barrier film 90 described later may corrode.

Therefore, from the viewpoint of suppressing corrosion of the barrier layer 91, the end part 90A is preferably located at a location closer to the second surface 62 than the boundary between the seal surface 63 and the first surface 61. From the same viewpoint, the end part 90B is preferably located at a position closer to the opening of the through-hole 60X on the second surface 62 side than the opening thereof on the first surface 61 side. The end part 90A may be located at a boundary between the seal surface 63 and the first surface 61, or may extend to a position closer to the electrode assembly 20 than the lid 60. The end part 90B may be located in the vicinity of the opening of the through-hole 60X on the first surface 61 side, or may extend to a position closer to the electrode assembly 20 than the lid 60.

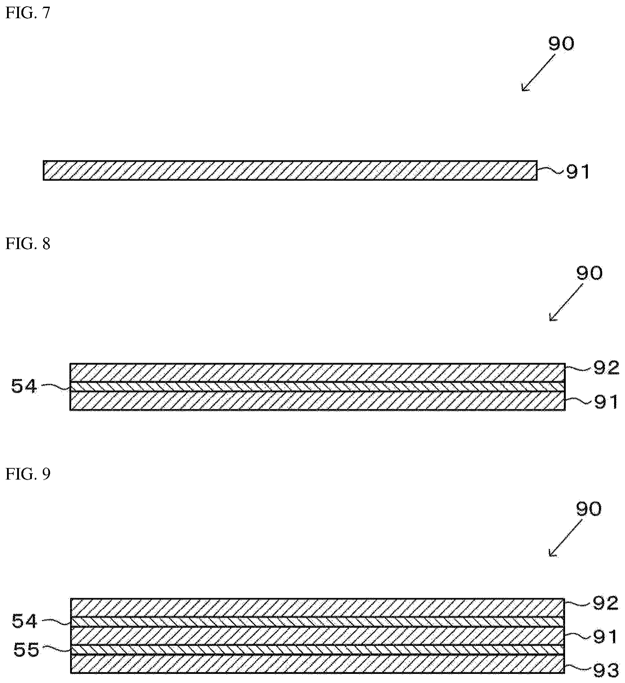

Figs. 7 to 9 are sectional views showing examples of a layer configuration of the barrier film 90.

As shown in Fig. 7, the barrier film 90 may include at least the barrier layer 91. Specifications of the barrier layer 91 are similar to the specifications of the barrier layer 52 of the exterior film 50. The barrier layer 91 may be thinner than the barrier layer 52 of the exterior film 50. When the barrier film 90 is a single layer including only the barrier layer 91, one surface of the barrier layer 91 is joined to the lid 60 with an adhesive or the like. When the barrier film 90 is a single layer including only the barrier layer 91, the other surface of the barrier layer 91 is joined to the heat-sealable resin layer 53 of the exterior film 50 with an adhesive or the like.

As shown in Fig. 8, the barrier film 90 may include an outer layer 92 laminated on a surface of the barrier layer 91 opposite to a surface joined to the lid 60. The outer layer 92 serves as, for example, a base material layer or a heat-sealable resin layer. The role as a base material layer is to protect the barrier layer 91. The role as the heat-sealable resin layer is to be heat-sealed with the heat-sealable resin layer 53 of the exterior film 50. When the outer layer 92 serves as a base material layer, the specifications of the outer layer 92 as a base material layer are similar to the specifications of the base material layer 51 of the exterior film 50. When the outer layer 92 serves as a heat-sealable resin layer, the specifications of the outer layer 92 as a heat-sealable resin layer are similar to the specifications of the heat-sealable resin layer 53 of the exterior film 50. When the outer layer 92 serves as a heat-sealable resin layer, it can be suitably joined to the adhesive film 31. When the outer layer 92 serves as a heat-sealable resin layer, the outer layer 92 may be thinner than the heat-sealable resin layer 53. When the outer layer 92 serves as a heat-sealable resin layer, the thickness of the outer layer 92 may be, for example, 5 to 20 µm. When the outer layer 92 is a base material layer, the barrier layer 91 is protected. When the outer layer 92 is a base material layer, the outer layer 92 and the heat-sealable resin layer 53 are joined with an adhesive or the like. When the outer layer 92 is a heat-sealable resin layer, the outer layer 92 and the heat-sealable resin layer 53 can be suitably joined by heat fusion. The barrier layer 91 and the outer layer 92 may be joined by the adhesive layer 54. When the outer layer 92 has bondability to the barrier layer 91, the adhesive layer 54 can be omitted.

As shown in Fig. 9, the barrier film 90 may include a heat-sealable resin layer 93 laminated on a surface of the barrier layer 91 joined to the lid 60. Specifications of the heat-sealable resin layer 93 are similar to the specifications of the heat-sealable resin layer 53 of the exterior film 50. The heat-sealable resin layer 93 may be thinner than the heat-sealable resin layer 53. The thickness of the heat-sealable resin layer 93 may be, for example, 5 to 20 µm. When the barrier film 90 includes the heat-sealable resin layer 93, the barrier film 90 and the lid 60 can be suitably joined by heat fusion. The barrier layer 91 and the heat-sealable resin layer 93 may be joined by the adhesive layer 55.

In the present embodiment, the barrier film 90 has the configuration shown in Fig. 9, and the outer layer 92 is a heat-sealable resin layer. Therefore, in the present embodiment, the second sealed portion 80 in which the heat-sealable resin layer 53 of the exterior film 50 and the seal surface 63 of the lid 60 are joined with the barrier film 90 interposed therebetween is formed. Hereinafter, the sealing strength between the heat-sealable resin layer 53 of the exterior film 50 and the seal surface 63 of the lid 60 may be referred to as sealing strength of the second sealed portion 80. The sealing strength of the second sealed portion 80 is the sealing strength between the heat-sealable resin layer 53 and the lid 60 in the long-side portion of the seal surface 63, that is, the seal surface 63 extending in the LR (width) direction in Fig. 1A.

The sealing strength of the second sealed portion 80 is measured as follows. First, a notch is formed in a portion of the exterior film 50 constituting the first surface 41 of the outer packaging 40, and three belt-shaped members 41X, 41Y, and 41Z (see a two-dot chain line in Fig. 1B) arranged in the LR direction are formed. The widths of the three belt-shaped members 41X, 41Y, and 41Z in the LR direction are 15 mm. End parts of the belt-shaped members 41X, 41Y, and 41Z are joined to the lid 60 at the second sealed portion 80. The length of the lid 60 in the LR direction is 45 mm or more. Next, the sealing strength of each of the belt-shaped members 41X, 41Y, and 41Z is measured by pulling the end part opposite to the end parts of the belt-shaped members 41X, 41Y, and 41Z joined to the lid 60 upward in the UD direction (direction opposite to the first surface 41B). In the present embodiment, the sealing strength of the second sealed portion 80 is an average value of the sealing strengths of the belt-shaped members 41X, 41Y, and 41Z. When the length of the lid 60 in the LR direction is less than 45 mm, three belt-shaped members having an arbitrary width of X mm less than 15 mm are formed, and the sealing strengths of the three belt-shaped members are measured by the same method as when the length of the lid 60 in the LR direction is 45 mm or more. Each of the obtained sealing strengths is divided by an arbitrary width X mm and multiplied by 15 to be converted into the sealing strengths of the three belt-shaped members at a width of 15 mm. The sealing strength of the second sealed portion 80 is an average value of the sealing strengths of the three belt-shaped members converted into a width of 15 mm. The sealing strength of the second sealed portion 80 of the lid 60 divided into a plurality of parts including long sides and short sides is the sealing strength at the long-side portion of the seal surface 63 of the plurality of parts.

From the viewpoint of suitably maintaining the state in which the electrode assembly 20 is sealed with the outer packaging 40, the sealing strength of the second sealed portion 80 is preferably 40 N/15 mm or more, still more preferably 50 N/15 mm or more, still more preferably 60 N/15 mm or more, still more preferably 70 N/15 mm or more, still more preferably 85 N/15 mm or more. When the sealing strength of the second sealed portion 80 is 40 N/15 mm or more, a state in which the electrode assembly 20 is sealed with the outer packaging 40 is suitably maintained even if the electrical storage device 10 is used for, for example, several years (less than 10 years). When the sealing strength of the second sealed portion 80 is 85 N/15 mm or more, a state in which the electrode assembly 20 is sealed with the outer packaging 40 is suitably maintained even if the electrical storage device 10 is used for, for example, 10 years or more. The sealing strength of the second sealed portion 80 is preferably 300 N/15 mm or less. The sealing strength of the second sealed portion 80 is preferably in the range of 40 N/15 mm to 300 N/15 mm, 50 N/15 mm to 300 N/15 mm, 60 N/15 mm to 300 N/15 mm, 70 N/15 mm to 300 N/15 mm, or 85 N/15 mm to 300 N/15 mm.

### <1-2. Method for Manufacturing Electrical Storage Device>

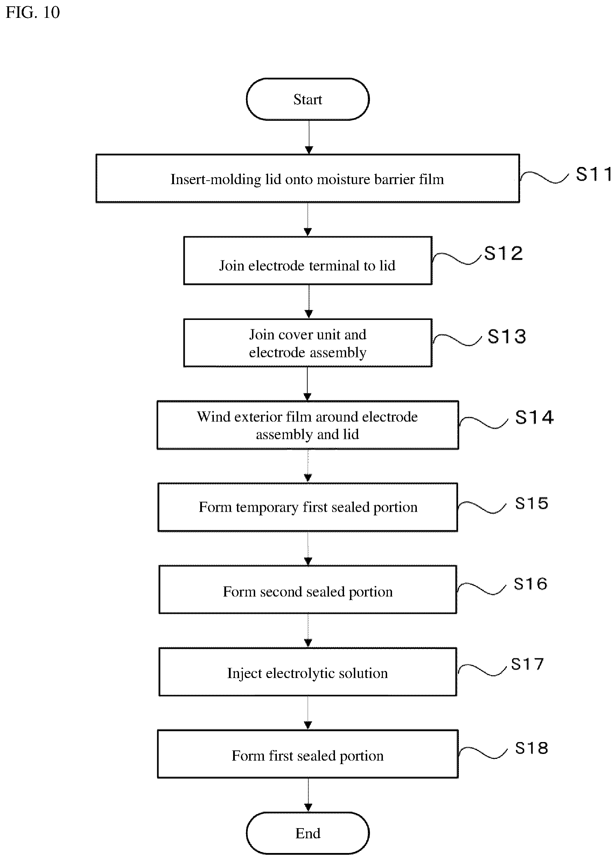

Fig. 10 is a flowchart showing an example of a method for manufacturing the electrical storage device 10. The method for manufacturing the electrical storage device 10 includes, for example, a first step, a second step, a third step, a fourth step, a fifth step, a sixth step, a seventh step, and an eighth step. The first to eighth steps are carried out by, for example, a manufacturing apparatus for the electrical storage device 10. The following term "first to eighth steps" refers to conveniently assigned names of the steps of the method for manufacturing the electrical storage device 10, and does not necessarily mean the order of the steps.

In the first step in step S11, the manufacturing apparatus insert-molds the lid 60 onto the barrier film 90.

The second step in step S12 is carried out after the first step. In the second step, the manufacturing apparatus joins the electrode terminal 30 to the lid 60 to which the barrier film 90 is joined. When the second step is completed, a cover unit 110 in which the barrier film 90 and the electrode terminal 30 are joined to the lid 60 is completed. That is, the first step and the second step correspond to a method for manufacturing the cover unit 110.

The third step in step S13 is carried out before or after the second step. In the third step, the manufacturing apparatus disposes the cover unit 100 on the side of the electrode assembly 20, and joins the electrode terminal 30 and the electrode assembly 20. In the method for manufacturing the electrical storage device 10, instead of the first to third steps, the electrode assembly 20 and the electrode terminal 30 may be joined first, and the lid 60 may be joined to the electrode terminal 30 joined to the electrode assembly 20. In the modification, the electrode terminal 30 may protrude from a region between any surface of the seal surfaces 63A to 63D and the exterior film 50 to the outside of the outer packaging 40. The barrier film 90 may be joined to the lid 60 after the lid 60 and the electrode terminal 30 are joined, or may be joined to the lid 60 before the lid 60 and the electrode terminal 30 are joined.

The fourth step in step S14 is carried out after the third step. In the fourth step, the manufacturing apparatus winds the exterior film 50 around the electrode assembly 20 and the lid 60. In the fourth step, the manufacturing apparatus winds the exterior film 50 around the electrode assembly 20 and the lid 60 with tension applied to the exterior film 50 while controlling the movement of the electrode assembly 20 and the lid 60 by a regulating means. The regulating means is, for example, a groove into which the electrode assembly 20 and the lid 60 are fitted. The regulating means may be an apparatus that applies an external force to the electrode assembly 20 and the lid 60 so that the electrode assembly 20 and the lid 60 do not move. The regulating means may be an apparatus that applies a force to the electrode assembly 20 and the lid 60 in a direction opposite to a direction in which the exterior film 50 is pulled. Note that the regulating means may include a roller for removing wrinkles of the exterior film 50 by running on the exterior film 50 with the exterior film 50 being pulled.

The fifth step in step S15 is carried out after the fourth step. In the fifth step, the manufacturing apparatus forms a first sealed portion in which an unsealed portion for injecting an electrolytic solution is partially formed (hereinafter, referred to as "temporary first sealed portion"). When the electrical storage device 10 is, for example, an all-solid-state battery, a step of injecting an electrolytic solution is not necessary, and thus, in the fourth step, the manufacturing apparatus forms the first sealed portion 70.

The sixth step in step S16 is carried out after the fifth step. In the sixth step, the manufacturing apparatus forms the second sealed portion 80 by heat-sealing the heat-sealable resin layer 53 of the exterior film 50 and the seal surface 63 of the lid 60 with the barrier film 90 interposed therebetween.

The seventh step in step S17 is carried out after the sixth step. In the seventh step, the electrolytic solution is injected from the unsealed portion formed in the temporary first sealed portion. After the seventh step, an aging step and a degassing step are carried out.

The eighth step in step S18 is carried out after the seventh step, the aging step, and the degassing step are completed. In the eighth step, the manufacturing apparatus forms the first sealed portion 70 by heat-sealing a portion including the unsealed portion of the temporary first sealed portion. When the electrical storage device 10 is, for example, an all-solid-state battery, the seventh step and the eighth step are omitted.

### <1-3. Action and Effect of Electrical Storage Device>

According to the electrical storage device 10, since the barrier film 90 covers at least a part of the seal surface 63 of the lid 60, entry of at least one of moisture and gas from a region between the exterior film 50 and the lid 60 is suppressed.

### [2. Second Embodiment]

An electrical storage device 200 of a second embodiment is different from the electrical storage device 10 of the first embodiment in that a cover unit 210 is included, and other configurations are the same as in the electrical storage device 10 of the first embodiment. Hereinafter, the electrical storage device 200 of the second embodiment will be described mainly for portions different from the electrical storage device 10 of the first embodiment.

### <2-1. Configuration of Electrical Storage Device>

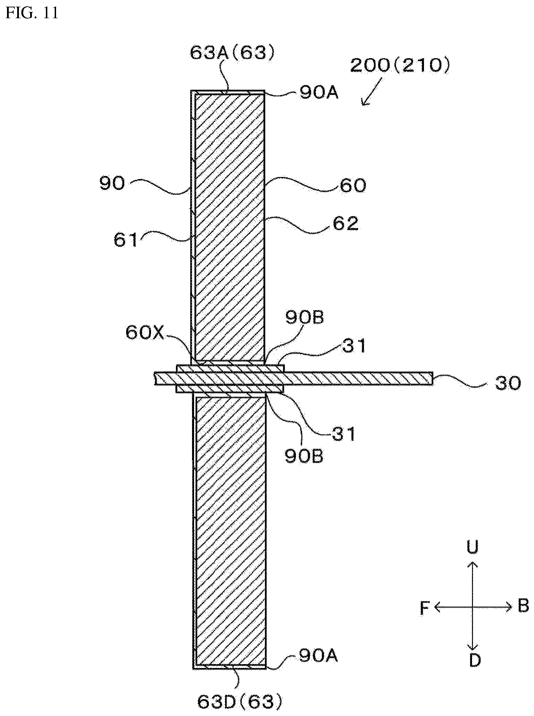

Fig. 11 is a partial sectional view of the cover unit 210 included in the electrical storage device 200 of the second embodiment. In the present embodiment, the barrier film 90 is joined to the lid 60 so as to cover the seal surface 63, the boundaries 64 to 67 (see Fig. 4), the inside of the through-hole 60X of the lid 60, and the first surface 61. The locations of the end part 90A and the end part 90B can be arbitrarily selected. In the present embodiment, the end part 90A is located at a boundary between the seal surface 63 and the second surface 62. The end part 90B is located near the opening of the through-hole 60X on the second surface 62 side. The end part 90B may be located at an intermediate portion between the first surface 61 and the second surface 62 of the through-hole 60X.

In the electrical storage device 200 of the second embodiment, the barrier film 90 covers the first surface 61 of the lid 60 facing the electrode assembly 20. Therefore, for example, when the electrical storage device 200 is a battery containing an electrolytic solution such as a lithium ion battery, a portion of the barrier film 90 covering the first surface 61 may come into contact with a gas such as hydrogen fluoride generated from the electrolytic solution, and the barrier layer 91 may corrode. Therefore, from the viewpoint of protecting the barrier layer 91, the barrier film 90 preferably includes the outer layer 92 as a base material layer as shown in Figs. 8 and 9.

### <2-2. Action and Effect of Electrical Storage Device>

According to the electrical storage device 200, since the barrier film 90 covers at least a part of the seal surface 63 of the lid 60, entry of at least one of moisture and gas from a region between the exterior film 50 and the lid 60 is suppressed. Since the end part 90A and the end part 90B are less likely to come into contact with the electrolytic solution, corrosion of the barrier layer 91 is suppressed.

### [3. Third Embodiment]

An electrical storage device 300 of a third embodiment is different from the electrical storage device 10 of the first embodiment in that a cover unit 310 is included, and other configurations are the same as in the electrical storage device 10 of the first embodiment. Hereinafter, the electrical storage device 300 of the third embodiment will be described mainly for portions different from the electrical storage device 10 of the first embodiment.

### <3-1. Configuration of Electrical Storage Device>

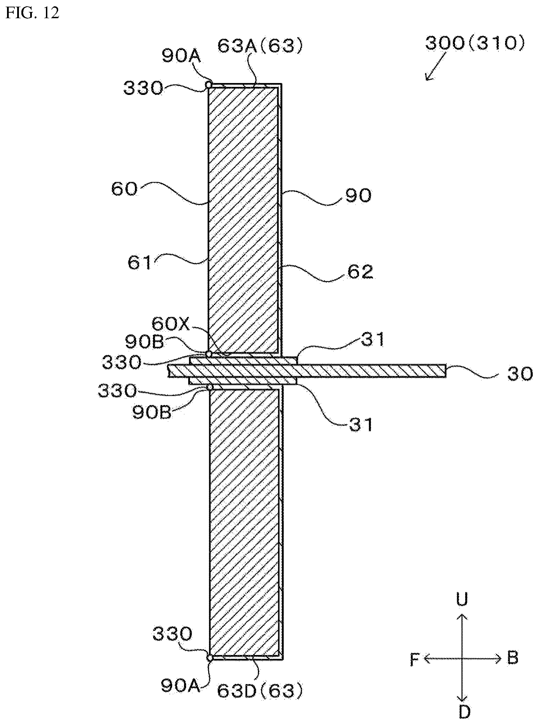

Fig. 12 is a partial sectional view of the cover unit 310 included in the electrical storage device 300 of the third embodiment. In the present embodiment, the barrier film 90 is joined to the lid 60 so as to cover the seal surface 63, the boundaries 64 to 67 (see Fig. 4), the inside of the through-hole 60X of the lid 60, and the second surface 62. The locations of the end part 90A and the end part 90B can be arbitrarily selected. In the present embodiment, the end part 90A is located at a boundary between the seal surface 63 and the first surface 61. The end part 90A may extend to a position closer to the electrode assembly 20 than the lid 60. The end part 90B is located near the opening of the through-hole 60X on the first surface 61 side. The end part 90B may extend to a position closer to the electrode assembly 20 than the through-hole 60X.

In the third embodiment, when the electrical storage device 300 is a battery containing an electrolytic solution such as a lithium ion battery, end parts 90A and 90B of the barrier film 90 may come into contact with a gas such as hydrogen fluoride generated from the electrolytic solution. Therefore, as shown in Figs. 8 and 9, even when the barrier film 90 has a configuration including the outer layer 92 as a base material layer, the barrier layer 91 may be corroded by contact between the end parts 90A and 90B and a gas such as hydrogen fluoride. Thus, in the present embodiment, the end parts 90A and 90B are covered with a covering portion 330. The material for forming the covering portion 330 can be arbitrarily selected as long as it is a material that can protect the end parts 90A and 90B. In the present embodiment, the material for forming the covering portion 330 is resin. The covering portion 330 may cover at least one of the end part 90A and the end part 90B.

### <3-2. Action and Effect of Electrical Storage Device>

According to the electrical storage device 300, the following effects can be obtained in addition to the effects similar to the effects obtained by the electrical storage device 10 of the first embodiment.

The end parts 90A and 90B of the barrier film 90 are covered with the covering portion 330. Therefore, even when the end parts 90A and 90B of the barrier film 90 come into contact with a gas such as hydrogen fluoride generated from the electrolytic solution, corrosion of the barrier layer 91 can be suppressed.

### [4. Fourth Embodiment]

An electrical storage device 400 of a fourth embodiment is different from the electrical storage device 10 of the first embodiment in that a cover unit 410 is included, and other configurations are the same as in the electrical storage device 10 of the first embodiment. Hereinafter, the electrical storage device 400 of the fourth embodiment will be described mainly for portions different from the electrical storage device 10 of the first embodiment.

### <4-1. Configuration of Electrical Storage Device>

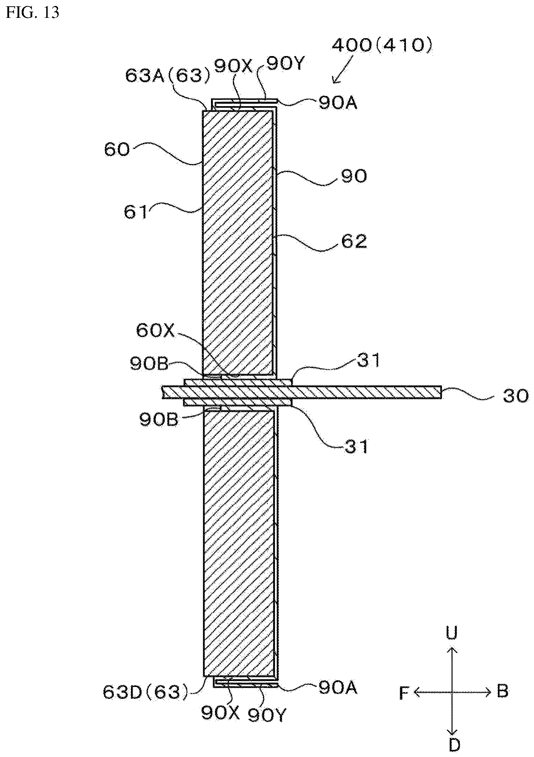

Fig. 13 is a partial sectional view of the cover unit 410 included in the electrical storage device 400 of the fourth embodiment. In the present embodiment, the barrier film 90 is joined to the lid 60 so as to cover the seal surface 63, the inside of the through-hole 60X of the lid 60, and the second surface 62.

When the electrical storage device 10 is a battery containing an electrolytic solution such as a lithium ion battery, end part 90A of the barrier film 90 may come into contact with a gas such as hydrogen fluoride generated from the electrolytic solution, and the barrier layer 91 may corrode. In the present embodiment, in order to suppress corrosion of the barrier layer 91, the location of the end part 90A is devised.

The barrier film 90 includes a joint portion 90X joined to the seal surface 63 and a folded portion 90Y connected to the joint portion 90X and folded back toward the second surface 62. The end part 90A of a portion of the barrier film 90 covering the seal surface 63 is located at the folded portion 90Y. The folded portion 90Y may extend outward from the lid 60 in the FB direction. In the present embodiment, the barrier layer 91 of the folded portion 90Y or the heat-sealable resin layer 93 of the barrier film 90 is joined to the heat-sealable resin layer 53 of the exterior film 50.

The location of the end part 90B can be arbitrarily selected. In the present embodiment, the end part 90B is located inside the through-hole 60X. Therefore, contact between the end part 90B and a gas such as hydrogen fluoride is suppressed. The end part 90B may be located at a position closer to the opening of the through-hole 60X on the second surface 62 side than the opening thereof on the first surface 61 side. The end part 90B may be located at a position closer to the opening of the through-hole 60X on the first surface 61 side than the opening thereof on the second surface 62 side. The end part 90B may be located in the vicinity of the opening of the through-hole 60X on the first surface 61 side, or may extend to a position closer to the electrode assembly 20 than the lid 60. The end part 90B may be located outside the through-hole 60X on the second surface 62 side. When the end part 90B is located outside the through-hole 60X on the second surface 62 side, a portion of the barrier film 90 located outside the through-hole 60X may be bent.

### <4-2. Action and Effect of Electrical Storage Device>

According to the electrical storage device 400, the following effects can be obtained in addition to the effects similar to the effects obtained by the electrical storage device 10 of the first embodiment.

Since the end part 90A is located at the folded portion 90Y folded back to the opposite side of the electrode assembly 20, contact between the end part 90A and a gas such as hydrogen fluoride is suppressed. Therefore, corrosion of the barrier layer 91 can be suppressed.

### [5. Fifth Embodiment]

An electrical storage device 500 of a fifth embodiment is different from the electrical storage device 10 of the first embodiment in that a cover unit 510 is included, and other configurations are the same as in the electrical storage device 10 of the first embodiment. Hereinafter, the electrical storage device 500 of the fifth embodiment will be described mainly for portions different from the electrical storage device 10 of the first embodiment.

### <5-1. Configuration of Electrical Storage Device>

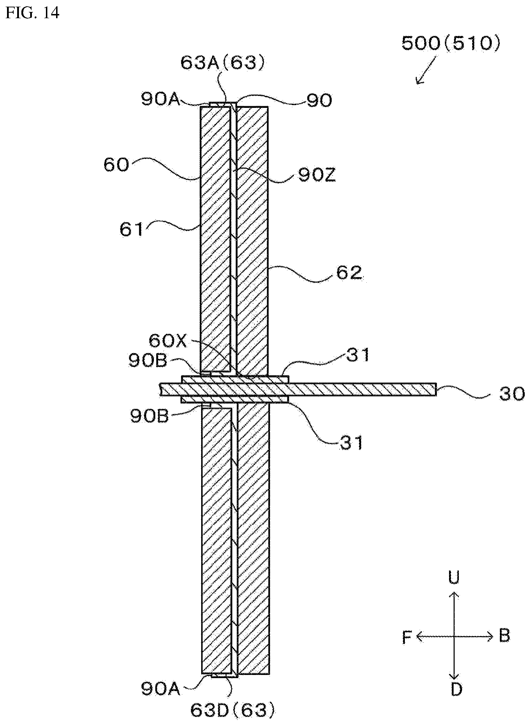

Fig. 14 is a partial sectional view of the cover unit 510 included in the electrical storage device 500 of the fifth embodiment. In the present embodiment, the barrier film 90 is joined to the lid 60 so as to cover a part of the seal surface 63 and the inside of the through-hole 60X of the lid 60.

The barrier film 90 includes an inner portion 90Z disposed in at least a part of the inside of the lid 60. The inner portion 90Z is a portion between a part of the seal surface 63 and a portion covering the inside of the through-hole 60X of the lid 60. The cover unit 510 of the present embodiment can be manufactured, for example, by insert-molding the lid 60 onto the barrier film 90.

The locations of the end part 90A and the end part 90B can be arbitrarily selected. Similarly to the first embodiment, from the viewpoint of suppressing corrosion of the barrier layer 91, the end part 90A is preferably located at a location closer to the second surface 62 than the boundary between the seal surface 63 and the first surface 61. The end part 90A may be located at a boundary between the seal surface 63 and the first surface 61, or may extend to a position closer to the electrode assembly 20 than the lid 60. From the same viewpoint, the end part 90B is preferably located at a position closer to the opening of the through-hole 60X on the second surface 62 side than the opening thereof on the first surface 61 side. The end part 90B may be located in the vicinity of the opening of the through-hole 60X on the first surface 61 side, or may extend to a position closer to the electrode assembly 20 than the lid 60.

### <5-2. Action and Effect of Electrical Storage Device>

According to the electrical storage device 500, effects similar to the effects obtained by the electrical storage device 10 of the first embodiment can be obtained.

### [6. Sixth Embodiment]

An electrical storage device 600 of a sixth embodiment is different from the electrical storage device 10 of the first embodiment in that a cover unit 610 is included, and other configurations are the same as in the electrical storage device 10 of the first embodiment. Hereinafter, the electrical storage device 600 of the sixth embodiment will be described mainly for portions different from the electrical storage device 10 of the first embodiment.

### <6-1. Configuration of Electrical Storage Device>

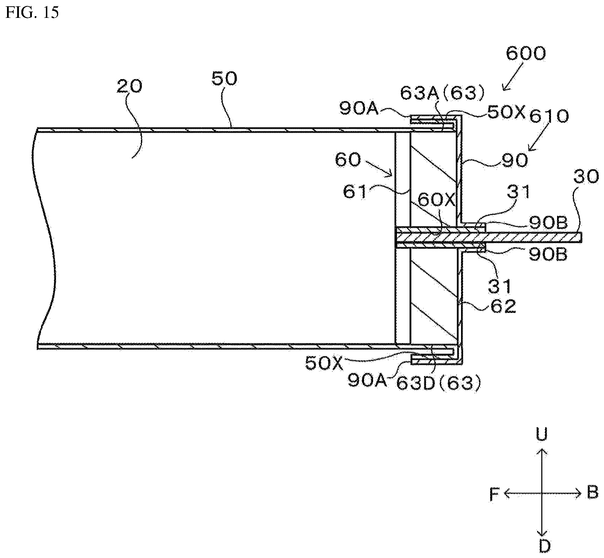

Fig. 15 is a sectional view of the electrical storage device 600 of the sixth embodiment. In the present embodiment, the heat-sealable resin layer 53 of the exterior film 50 is joined to the seal surface 63 of the lid 60. The exterior film 50 has a folded portion 50X connected to a portion joined to the seal surface 63 of the lid 60 and folded back toward the electrode assembly 20. The folded portion 50X covers the lid 60. The barrier film 90 is joined to the exterior film 50 so as to cover the seal surface 63 outside the exterior film 50. In the present embodiment, the barrier film 90 covers the seal surface 63, the boundaries 64 to 67, the second surface 62, and the electrode terminal 30. The end part 90A of the portion of the barrier film 90 covering the seal surface 63 is located, for example, on the folded portion 50X. The end part 90A may not be located on the folded portion 50X.

### <6-2. Action and Effect of Electrical Storage Device>

According to the electrical storage device 600, the following effects can be obtained in addition to the effects similar to the effects obtained by the electrical storage device 10 of the first embodiment.

The barrier film 90 is joined to the lid 60 with the exterior film 50 interposed therebetween so as to cover the seal surface 63 outside the exterior film 50. Therefore, the end part 90A is located outside the exterior film 50. Since contact between the end part 90A and a gas such as hydrogen fluoride is suppressed, corrosion of the barrier layer 91 is suppressed.

### [7. Modifications]

The above-described embodiment is an example of possible forms of an electrical storage device, a barrier film, a cover unit, and a method for manufacturing an electrical storage device according to the present invention, and is not intended to limit the forms thereof. The electrical storage device, the barrier film, the cover unit, and the method for manufacturing an electrical storage device according to the present invention may have a form different from that exemplified in the embodiment. An example thereof is a form in which a part of the configuration of the embodiment is replaced, changed or omitted, or a form in which a new configuration is added to the embodiment. Some examples of modifications of the embodiment will be described below. Note that the following modifications can be combined as long as they are not technically contradictory.

<7-1>
In the electrical storage device 10 of the first embodiment, the barrier film 90 may cover the electrode terminal 30. This modification can also be applied to the electrical storage devices 200, 300, 400, and 500 of the second to fifth embodiments.

<7-2>
The method for manufacturing the electrical storage device 10 of the first embodiment can be arbitrarily changed. For example, in the first step in step S11, the lid 60 and the barrier film 90 may be prepared in advance, and the barrier film may be joined to the lid 60. In a first example of this modification, for example, it is preferable to form a fold corresponding to the first surface 61 which is a surface to be covered and each of the seal surfaces 63A to 63D of the lid 60 with respect to the barrier film 90. When a fold is formed in the barrier film 90, the lid 60 and the barrier film 90 can be easily brought into close contact with each other. In a second example of the modification, a recess may be formed in the barrier film 90 prepared in advance, the lid 60 prepared in advance may be accommodated in the recess, and the barrier film 90 and the lid 60 may be joined.

<7-3>
In the electrical storage device 10 of the first embodiment, the barrier film 90 may be joined to the lid 60 so as to cover the first surface 61 of the lid 60. In the electrical storage device 200 of the second embodiment, the barrier film 90 may be joined to the lid 60 so as to cover the second surface 62 of the lid 60. In the electrical storage device 300 of the third embodiment, the barrier film 90 may be joined to the lid 60 so as to cover the first surface 61 of the lid 60. In the electrical storage device 400 of the fourth embodiment, the barrier film 90 may be joined to the lid 60 so as to cover the first surface 61 of the lid 60. In the electrical storage device 500 of the fifth embodiment, the barrier film 90 may be joined to the lid 60 so as to cover at least one of the first surface 61 and the second surface 62 of the lid 60. In the electrical storage device 600 of the sixth embodiment, the barrier film 90 may be joined to the lid 60 so as to cover the first surface 61 of the lid 60.

<7-4>
In the electrical storage device 10 of the first embodiment, a location at which the electrode terminal 30 is disposed can be arbitrarily selected. For example, the electrode terminal 30 may protrude from at least one of the first sealed portion 70 and the second sealed portion 80. This modification can also be applied to the electrical storage devices 200, 300, 400, 500, and 600 of the second to sixth embodiments.

### [8. Examples]

### <8-1. First Test>

The inventors of the present application conducted a first test of confirming water vapor barrier properties for the electrical storage devices of Examples 1 and 2 and Comparative Examples 1 and 2. In the following description, among the elements forming the electrical storage devices of examples and the comparative example, elements that are identical to those in the embodiment are given the same symbols as in the embodiment for illustration purpose.

The electrical storage devices of Examples 1 and 2 have a configuration similar to that of the electrical storage device of the first embodiment. The electrical storage devices of Examples 1 and 2 include a pseudo electrode assembly instead of the electrode assembly 20. The electrical storage devices of Examples 1 and 2 do not include the electrode terminal 30. The specifications of the electrical storage devices of Examples 1 and 2 are as follows.

The barrier film is a laminate film in which the first outer layer, the barrier layer, and the second outer layer are laminated in the stated order. The material for forming the first outer layer and the second outer layer is unstretched polypropylene. The material for forming the barrier layer is aluminum. The thickness of the first outer layer and the thickness of the second outer layer are 60 µm. The thickness of the barrier layer is 80 µm. The first outer layer and the barrier layer are joined by dry lamination. The second outer layer and the barrier layer are joined by dry lamination.

The material for forming the lid 60 is polypropylene. The length (height) of the lid 60 in the UD direction is 30 mm, the length (width) in the LR direction is 100 mm, and the length (thickness) in the FB direction is 5 mm.

The electrical storage devices of Examples 1 and 2 are manufactured by injecting the lid 60 with respect to the barrier film disposed in a molding die. In the electrical storage device of Example 1, the exterior film 50 covers the second surface 62 of the lid 60 and the entire seal surface 63. In the electrical storage device of Example 2, the exterior film 50 covers the first surface 61 of the lid 60 and the entire seal surface 63.

The electrical storage device of Comparative Example 1 has the same configuration as in the electrical storage device of Example 1 or Example 2 except that the barrier film is not provided. The electrical storage device of Comparative Example 2 has the same configuration as in the electrical storage device of Example 1 except that the barrier film is joined only to the second surface 62 of the lid 60 and except for the layer configuration of the barrier film. The material for forming the first outer layer of the barrier film of the electrical storage device of Comparative Example 2 is a laminate of polyethylene terephthalate and nylon. The thickness of the polyethylene terephthalate layer in the first outer layer is 12 µm, and the thickness of the nylon layer is 25 µm. The material for forming the barrier layer of the barrier film of the electrical storage device of Comparative Example 2 is aluminum. The thickness of the barrier layer is 40 µm. The material for forming the second outer layer of the barrier film of the electrical storage device of Comparative Example 2 is polypropylene. The thickness of the second outer layer is 80 µm. In the electrical storage device of Comparative Example 2, the second outer layer is joined to the second surface 62 of the lid 60. In the electrical storage device of Comparative Example 2, the barrier film is not joined to the seal surface 63 of the lid 60. In the electrical storage device of Comparative Example 2, the first outer layer or the second outer layer and the second surface 62 of the lid 60 are held in contact with each other at a temperature of 180°C under vacuum for 60 seconds, and then pressed at 5 kN for 15 seconds to be joined.

The electrical storage devices of Examples 1 and 2 and Comparative Examples 1 and 2 are manufactured by winding the exterior film 50 around two lids 60 and a pseudo electrode assembly to form the first sealed portion 70 and the second sealed portion 80. For the sealing conditions of the first sealed portion 70, the temperature is 220°C, the surface pressure is 1.1 MPa, and the time is 7 seconds. For the sealing conditions of the second sealed portion 80, the temperature is 180°C, the surface pressure is 0.78 MPa, and the time is 5 seconds. The width of the exterior film 50 is 160 mm, and the length is 300 mm.

Next, the electrical storage devices of Examples 1 and 2 and Comparative Examples 1 and 2 were cut at the center in the FB direction, 20 g of a salt-free electrolytic solution was added from the formed opening, and the opening was sealed to form an opening sealed portion. The salt-free electrolytic solution is pure light (manufactured by UBE Corporation), and EC : DMC : DEC = 1 : 1 : 1 = (v/v/v). The opening sealed portion is formed at a position of 70 mm to 80 mm from the outer end of the lid 60 in the FB direction. The width of the opening sealed portion is 10 mm. The opening sealed portion is formed by heat-sealing twice with a heat seal bar having a width of 7 mm and shifted by 3 mm. For the sealing conditions of the opening sealed portion, the temperature is 190°C, the surface pressure is 1 MPa, and the time is 5 seconds.

Next, the electrical storage devices of Examples 1 and 2 and Comparative Examples 1 and 2 in which the opening sealed portion was formed were stored in a thermo-hygrostat layer for 7 days with the lid 60 facing downward. The temperature of the thermo-hygrostat layer is 65°C, and the relative humidity is 90%.

Next, the electrical storage devices of Examples 1 and 2 and Comparative Examples 1 and 2 were taken out from the thermo-hygrostat layer, cooled at room temperature for 2 hours, 0.5 ml of the liquid therein was sampled with Karl Fischer in a dry room, the moisture amount was measured, and the water permeation amount was calculated. Karl Fischer is, for example, a moisture vaporizer ADP-611 (manufactured by Kyoto Electronics Manufacturing Co., Ltd.). The water permeation amount to be calculated is an amount per one lid 60.

The water permeation amount of the electrical storage device of Example 1 was 1.18 mg. The water permeation amount of the electrical storage device of Example 2 was 0.711 mg. The water permeation amount of the electrical storage device of Comparative Example 1 was 25.5 mg. The water permeation amount of the electrical storage device of Comparative Example 2 was 3.85 mg. From the results of the first test, it was confirmed that the water permeation amount was reduced by disposing the barrier film on the seal surface 63 of the lid 60. From the results of Examples 1 and 2, it was confirmed that the water permeation amount was reduced when the barrier film was disposed on the first surface 61 rather than the second surface 62 of the lid 60.

### <8-2. Second Test>

The inventors of the present application conducted a second test of confirming insulation quality and corrosiveness of the barrier film for the electrical storage devices of Examples 3 and 4. In the following description, among the elements forming the electrical storage devices of examples and the comparative example, elements that are identical to those in the embodiment are given the same symbols as in the embodiment for illustration purpose.

The electrical storage device of Example 3 has the same configuration as in the electrical storage device of Example 1. The electrical storage device of Example 4 has the same configuration as in the electrical storage device of Example 2. In the electrical storage device of Example 3, the outermost layer (the first outer layer or the second outer layer) of the portion of the barrier film joined to the second surface 62 of the lid 60 was scraped off to expose the barrier layer. For the sealing conditions of the first sealed portion 70 of the electrical storage devices of Examples 3 and 4, the temperature is 220°C, the surface pressure is 1.1 MPa, and the time is 7 seconds. For the sealing conditions of the second sealed portion 80, the temperature is 180°C, the surface pressure is 1.56 MPa, and the time is 7 seconds.

The electrical storage devices of Examples 3 and 4 were manufactured, and then cut at the center in the FB direction so as to form an opening. The barrier layer 52 of the exterior film 50 exposed at the opening was covered with an insulating tape.

Next, in the electrical storage device of Example 3, the exposed barrier layer and one end part of a conductive wire were joined by soldering and dotite. The joint part between the barrier layer and the conductive wire was protected with an insulating tape. In the electrical storage device of Example 4, the ridge part of the second sealed portion 80 was cut with a cutter to expose the end part 90A of the barrier film, and the exposed end part 90A and the end part of one conductive wire were joined to each other by dotite. The joint part between the end part 90A and the conductive wire was protected with an insulating tape. The dotite used in the second test is DOTITE D-500 (manufactured by FUJIKURA KASEI CO., LTD.).

<8-2-1. Confirmation of Insulation Quality>

About 15 ml to 20 ml (to the extent that the entire lid 60 was immersed) of acetone was poured into the openings of the electrical storage devices of Examples 3 and 4, and the resultant was left to stand for about 1 minute. Next, for the electrical storage devices of Examples 3 and 4, the other end part of the conductive wire joined to the barrier layer of the barrier film was connected to one terminal clip of a resistance meter. As the other terminal of the resistance meter, a rod-shaped terminal was used and immersed in acetone. The purity of acetone used in the second test is 99.8%.
The resistance meter is, for example, 3154 DIGITAL MΩ HiTESTER (manufactured by HIOKI E.E. CORPORATION).

Next, the resistance value was measured at an applied voltage of 100 V. The resistance value of the electrical storage device of Example 3 was 4.2 MΩ. The resistance value of the electrical storage device of Example 4 was overflow. It was confirmed that the electrical storage device of Example 3 had higher insulation quality of the barrier film than the electrical storage device of Example 4.

### <8-2-2. Confirmation of Corrosiveness>

From the openings of the electrical storage devices of Examples 3 and 4, 100 g of a salt-containing electrolytic solution was injected. Next, a lithium disk electrode was placed, and the opening was sealed with a tape. Then, a cathode of an electrochemical measurement apparatus and the lithium disk electrode were connected, and an anode of the electrochemical measurement apparatus and the other end part of the conductive wire were connected. The electrochemical measurement apparatus is, for example, VMP3 (manufactured by BioLogic). After OCV (Open Circuit Voltage) for 5 minutes, chronoamperometry was performed under the following setting conditions, and the currents flowing until 1200 minutes later were integrated.
· Set voltage: 0.100 V (vs. Ref)
· Test time: 24 hours

The integrated value of the corrosion currents up to 1200 minutes for the electrical storage device of Example 3 was 13.6 C. The integrated value of the corrosion currents up to 1200 minutes for the electrical storage device of Example 4 was 9.6×10⁻⁴ C. It was confirmed that in the electrical storage device of Example 4, corrosion of the barrier film was suppressed as compared with the electrical storage device of Example 3. That is, it was confirmed that the electrical storage device 10 of Example 4 can suppress corrosion of the barrier film.

Hereinafter, an example of a procedure for confirming the corrosiveness of the barrier film from the electrical storage device 10 as a finished product will be described.

First, the electrical storage device 10 is disassembled, and the electrode terminal 30 is cut to separate the electrode assembly 20 from the lid 60. At this time, when the second surface 62 of the lid 60 is disposed as a bottom surface, the exterior film 50 is made to remain 1.5 cm or more as compared with the seal surface 63 in the height direction. The end surface of the cut exterior film 50 is covered with an insulating tape.

Next, as in the case of the electrical storage device of Example 3 or the electrical storage device of Example 4, the barrier layer is exposed by cutting or the like, and the exposed barrier layer and one end part of the conductive wire are connected. At this time, care is taken so that the electrode terminal 30 does not conduct.

The sample prepared as described above is placed in a glass container such that the second surface 62 of the lid 60 is a bottom surface, and an electrolytic solution is injected from the first surface 61 of the lid 60 to a depth of about 1 cm. Next, a lithium disk electrode is placed on the sample. A cathode of an electrochemical measurement apparatus is connected to the lithium disk electrode. An anode of the electrochemical measurement apparatus is connected to the other end part of a conductive wire. Then, by performing chronoamperometry, the corrosiveness of the barrier film can be confirmed.

### Reference Signs List

10, 200, 300, 400, 500, 600 Electrical storage device
20 Electrode assembly
30 Electrode terminal
40 Outer packaging
40A Opening
50 Exterior film
60 Lid
61 First surface
62 Second surface
63 Seal surface
90 Barrier film
90A End part
92 Outer layer
110, 210, 310, 410, 510, 610 Cover unit
330 Covering portion

## Claims

1. An electrical storage device comprising:
an electrode assembly;
an outer packaging sealing the electrode assembly; and
a barrier film, wherein
the outer packaging includes
an exterior film wrapping the electrode assembly so as to form an opening, and
a lid disposed at the opening,
the lid has a first surface facing the electrode assembly, a second surface opposite to the first surface, and a seal surface connected to the first surface and the second surface, and
the barrier film is joined to the lid so as to cover at least a part of the seal surface.

2. The electrical storage device according to claim 1, wherein the barrier film is joined to the lid so as to cover at least a part of the first surface.

3. The electrical storage device according to claim 1 or 2, wherein the barrier film includes a barrier layer and an outer layer laminated on a side opposite to the lid with respect to the barrier layer.

4. The electrical storage device according to claim 2, wherein the barrier film includes
a barrier layer and an outer layer laminated on a side opposite to the lid with respect to the barrier layer, and
a portion covering at least a part of the seal surface and a portion covering at least a part of the first surface are connected, and an end part is located in the portion covering at least a part of the seal surface.

5. The electrical storage device according to claim 1, wherein the barrier film is joined to the lid so as to cover at least a part of the second surface.

6. The electrical storage device according to claim 5, wherein in the barrier film,
a portion covering at least a part of the seal surface and a portion covering at least a part of the second surface are connected, and
an end part is covered with a covering portion.

7. The electrical storage device according to claim 1, wherein an end part of the barrier film is located in a portion covering at least a part of the seal surface and is located closer to the second surface than a boundary between the first surface and the seal surface.

8. The electrical storage device according to claim 1, wherein
the barrier film has a portion connected to a portion joined to the lid and folded back toward the second surface, and
an end part of the barrier film is located on the portion folded back toward the second surface.

9. The electrical storage device according to claim 1 or 2, further comprising an electrode terminal electrically connected to the electrode assembly, wherein
the lid is configured to cover a part of the electrode terminal, and
the barrier film is disposed on at least a part of a region between the lid and the electrode terminal.

10. The electrical storage device according to claim 1 or 2, wherein the barrier film is disposed in at least a part of an inside of the lid.

11. The electrical storage device according to claim 1 or 5, wherein the barrier film is joined to the exterior film so as to cover at least a part of the seal surface outside the exterior film.

12. A cover unit used for an electrical storage device including an electrode assembly, and an exterior film wrapping the electrode assembly so as to form an opening, the cover unit comprising:
a lid disposed at the opening; and
a barrier film, wherein
the lid has a first surface, a second surface opposite to the first surface, and a seal surface connected to the first surface and the second surface, and
the barrier film is joined to the lid so as to cover at least a part of the seal surface.

13. The cover unit according to claim 12, further comprising an electrode terminal joined to the lid.

14. A barrier film used for the electrical storage device according to claim 2 or 5.

15. A barrier film used in the cover unit according to claim 12.

16. A method for manufacturing a cover unit, the cover unit being used for an electrical storage device including an electrode assembly, and an exterior film wrapping the electrode assembly so as to form an opening,
the cover unit including a lid disposed at the opening and a barrier film,
the lid having a first surface facing the electrode assembly, a second surface opposite to the first surface, and a seal surface connected to the first surface and the second surface,
the barrier film being joined to the lid so as to cover at least a part of the seal surface, the method comprising
a step of insert-molding the lid onto the barrier film.

17. A method for manufacturing a cover unit, the cover unit being used for an electrical storage device including an electrode assembly, and an exterior film wrapping the electrode assembly so as to form an opening,
the cover unit including a lid disposed at the opening and a barrier film,
the lid having a first surface facing the electrode assembly, a second surface opposite to the first surface, and a seal surface connected to the first surface and the second surface,
the barrier film being joined to the lid so as to cover at least a part of the seal surface, the method comprising
a step of joining the barrier film to the lid.
